# EUROPEAN PATENT APPLICATION

(11) **EP 4 807 734 A1**
(43) Date of publication of application: **16.09.2026**
(21) Application number: 25163870.6
(22) Date of filing: 14.03.2025
(51) Int. Cl.: G10L 13/02, G10L 25/30, G10L 21/003, G10L 21/02, G10L 25/51, G10L 25/69

(54) **SPEECH SIMILARITY EMBEDDINGS WITH SENSITIVITY TO RECORDING CONDITIONS VIA TWO-STAGE AUGMENTATIONS**

(71) Applicant: GDM Holding LLC, Mountain View CA 94043 (US)
(72) Inventor: ROTHFUSS, Jonas, Zurich (CH); TAGLIASACCHI, Marco, Zurich (CH)
(74) Representative: Varley, James Richard

(57) **Abstract**

The systems, methods and apparatus described herein are directed towards at least the use of a two-stage augmentation process for vocal audio samples to generate a training dataset for a machine-learning embedding model, the training of machine-learning embedding models on such training data, and the use of such a trained machine-learning embedding models to generate embedding of audio snippets for downstream tasks. The two-stage augmentation process has a first augmentation stage, in which strong augmentations are applied at an audio sample level, and a second augmentation stage, in which weak augmentations are applied at an audio snippet level, where an audio snippet is a section of audio extracted from an audio sample after the first augmentations are applied.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

The systems, methods and apparatus described herein are directed towards at least the use of a two-stage augmentation process for vocal audio samples to generate a training dataset for a machine-learning embedding model, the training of machine-learning embedding models on such training data, and the use of such a trained machine-learning embedding models to generate embedding of audio snippets for downstream tasks. The two-stage augmentation process has a first augmentation stage, in which strong augmentations are applied at an audio sample level, and a second augmentation stage, in which weak augmentations are applied at an audio snippet level, where an audio snippet is a section of audio extracted from an audio sample after the first augmentations are applied. Positive pairs of training snippets are generated from audio snippets with the same first augmentation but, in general, different second augmentations applied. Negative pairs of training snippets are generated from audio snippets with the different first augmentations applied and/or that originate from different underlying audio samples.

An embedding model can be trained on the resulting training dataset using a contrastive loss function to generate embeddings of audio snippets for use in downstream tasks. The two-stage augmentation process is a key part of the system's design. It ensures that the resulting embeddings are highly sensitive to the recording conditions present in the audio snippet. This means that if the same speaker is recorded in two different environments (e.g., with different microphones or background noise), the resulting embeddings will be significantly different. This characteristic enhances speaker privacy, as it makes it more challenging to consistently identify individuals across varying recording contexts.

According to a first aspect of this specification, there is described a computer implemented method comprising: for a plurality of training examples from a training dataset, each training example comprising a pair of audio snippets: processing, by a machine-learning embedding model, a representation of a first audio snippet in the pair of audio snippets to generate an encoded representation of the first audio snippet; processing, by the machine-learning embedding model, a representation of a second audio snippet in the pair of audio snippets to generate an encoded representation of the second audio snippet; and comparing the encoded representation of the first audio snippet to the encoded representation of the second audio snippet using a contrastive loss function. The method further comprises updating parameters of the machine-learning embedding model based at least in part on the comparisons of the encoded representations of the first audio snippets to the encoded representations of the second audio snippets. The training dataset comprises a plurality of training examples sampled from an augmented dataset. The augmented dataset comprises a plurality of augmented audio snippets, wherein an augmented audio snippet is generated by applying one or more augmentations from a second set of augmentations to an audio snippet taken from an underlying audio sample that has had one or more augmentations from a first set of augmentations applied, wherein the first set of augmentations are stronger than the second set of augmentations.

The first aspect may include one or more of the following features, either alone or in combination.

The strength of a set of augmentations measures how much the augmentation affects perceptual properties (e.g., psychoacoustic properties) of an audio recording. The first set of augmentations may include augmentations to an audio sample that alter one or more perceptual properties of the audio sample above respective just noticeable difference (JND) thresholds. The second set of augmentations may include augmentations to an audio snippet that alter one or more perceptual properties of the audio snippet below respective JND thresholds.

The training dataset may comprise a plurality of positive pairs of audio snippets, wherein one or more of the positive pair of audio snippets is sampled from augmented audio snippets of the same underlying audio sample with the same one or more augmentations from the first set of augmentations applied. The training dataset may further comprise a plurality of negative pairs of audio snippets, wherein one or more of the negative pair of audio snippets comprises a respective first augmented audio snippet sampled from an underlying audio sample with a respective first one or more augmentations from the first set of augmentations applied and a second augmented audio snippet sampled from an underlying audio sample with a second one or more augmentations from the first set of augmentations applied. One or more of the negative pair of audio snippets may comprise a respective first audio snippet sampled from a first underlying audio sample and a second audio snippet sampled from a second underlying audio sample.

The contrastive loss function may reward the encoded representation of the first audio snippet and the encoded representation of the second audio snippet of a positive pair being close in embedding space and penalize the encoded representation of the first audio snippet and the encoded representation of the second audio snippet of a negative pair being close in embedding space.

The representation of the first audio snippet in the pair of audio snippets and/or the representation of the second audio snippet in the pair of audio snippets may comprise a respective plurality of first embeddings. Each embedding in the plurality of first embeddings may encode features from a respective a temporal section of the corresponding audio snippet. The method may further comprise: generating, using a further machine-learning embedding model, the representation of the first audio snippet in the pair of audio snippets from the first audio snippet in the pair of audio snippets; and generating, using the further machine-learning embedding model, the representation of the second audio snippet in the pair of audio snippets from the second audio snippet in the pair of audio snippets.

According to a further aspect of this specification, there is described a computer implemented method comprising: for each of one or more audio samples: applying a respective one or more augmentations from a first set of augmentations to the audio sample to generate one or more augmented audio samples; extracting, from the one or more augmented audio samples, a plurality of audio snippets; and applying a respective further one or more augmentations from a second set of augmentations to one or more of the audio snippets to generate one or more augmented audio snippets. The method further comprises generating one or more positive pairs of audio snippets from audio snippets and/or augmented audio snippets, wherein the audio snippets in a positive pair are both extracted from the same augmented audio sample, or both extracted from the audio sample. The method further comprises generating one or more negative pairs of audio snippets from audio snippets and/or augmented audio snippets, wherein the audio snippets in a negative pair are extracted from different augmented audio samples. The method further comprises incorporating the positive pairs of audio snippets and negative pairs of audio snippets into a training dataset of pairs of audio snippets. The first set of augmentations are stronger than the second set of augmentations.

This aspect may include one or more of the following features, either alone or in combination.

The method may further comprise training a machine-learning embedding model on the training dataset using a contrastive loss function.

The first set of augmentations may comprise one or more of: a pitch shift; a change in volume; a change in the frequency response function; addition of reverberations and/or echoes; the addition of saturation effects; and/or the addition of noise. The respective one or more augmentations from the first set of augmentations may be selected randomly from the first set of augmentations.

The second set of augmentations may comprise one or more of: a change in speed; a change in volume; a change in the frequency- and/or phase response; applying a weak bandpass filter; adding reverberation; denoising; and/or adding saturation effects. The respective one or more further augmentations from the second set of augmentations may be selected randomly from the second set of augmentations.

According to a further aspect of this specification, there is described a computer implemented method comprising: inputting, into a machine-learning embedding model, a first encoded representation of an input audio sample, the first encoded representation comprising a plurality of first embeddings, wherein each embedding in the plurality of first embeddings encodes features from a respective a temporal section of the input audio sample; and processing, by the machine-learning embedding model, the first encoded representation of the input audio to generate a second embedding of the input audio sample, wherein the second embedding of the input audio encodes features from the whole input audio sample.

The machine-learning embedding model may have been trained using any of the methods described in relation to the first aspect.

According to a further aspect of this specification, there is described a system comprising one or more processors and a memory, the memory storing computer readable instructions that, when executed by a the one or more processors, causes the system to perform any one or more of the methods described herein.

According to a further aspect of this specification, there is described a computer program product comprising computer readable instructions that, when executed by a computer, cause the computer to perform any one or more of the methods described herein.

Particular embodiments of the subject matter described in this specification can be implemented so as to realize one or more of the following advantages.

The systems, methods, and apparatus described herein can provide embeddings of vocal audio that represent both speech content and recording conditions. These embeddings, due to their sensitivity to recording environment variations, can be used for downstream tasks such as verifying that generated audio matches the properties of a conditioning audio input. These embeddings facilitate verification while maintaining speaker privacy, as audio from the same speaker recorded under sufficiently different conditions will be mapped to distinct embedding vectors in the embedding space.

Furthermore, the use of the two-stage augmentation method can improve downstream task performance by making the embedding model insensitive to small variations in the recording conditions, and/or prevent the embedding model overfitting to spurious signals such as, e.g., frequency cutoffs of various microphones which are mostly imperceptible to the human ear, but still detectable by a model.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A shows an overview of an example method for generating embeddings of an audio sample.
FIG. 1B shows an overview of a further example method for generating embeddings of an audio sample.
FIG. 2 shows an overview of an example method for training an encoder model.
FIG. 3 shows an overview of an example method for generating a training dataset for training an encoder model.
FIG. 4 shows a flow diagram of an example method for training an encoder model.
FIG. 5 shows a flow diagram of an example method for generating a training dataset for training an encoder model.
FIG. 6 shows a flow diagram of an example method for generating embeddings of an audio sample.
FIG. 7 shows a schematic example of a system/apparatus for performing any of the methods described herein.
Like reference numbers and designations in the various drawings indicate like elements.

### DETAILED DESCRIPTION

Modern speech generating systems/models (e.g., VoiceLM, as used in Gemini Live and NotebookLM) are often conditioned on a voice ID or snippet of audio (e.g., a voice prompt) that controls the vocal characteristics of the utterances generated by the model. It is important to ensure that the speech model adheres to the voice conditioning so that the generated output audio properly reflects the characteristics of the voice conditioning.

Modern speech generating systems/models (e.g., VoiceLM) often use a voice ID or a short audio snippet (a voice prompt) to control the vocal characteristics of the generated speech. Ensuring that the generated audio faithfully reflects the characteristics of the voice prompt is important. To achieve this, quantitative measures of voice and speech similarity are employed. These metrics have applications beyond simple voice verification; they can be used to improve the quality of training data and to evaluate how well generated audio matches the conditioning voice across a wide range of queries. A key consideration is to measure not only the similarity of the voice itself but also the similarity of the recording environment, including factors like background noise and microphone characteristics. Furthermore, when working with data derived from human speech, it is important to prioritize privacy. This system reduces the risk of generating representations that could be used to reliably track or identify individuals across different recordings and contexts, thereby aiming to protect user privacy.

This specification describes systems, methods and apparatus that utilize a machine-learning embedding model (also referred to as an "encoder model") that ingest audio snippets and outputs a *d*-dimensional speech embedding that represents both the voice and the recording conditions in the audio snippet. The model is trained in a self-supervised manner using a contrastive loss such that audios with the same speaker and recorded in similar conditions are mapped to similar embeddings. Thanks to this property, similarity metrics between the embeddings can be used as speech similarity scores for downstream tasks, such as speaker verification, or as conditioning data for audio generation models.

For model training, an augmented dataset is generated using a two-stage augmentation scheme. This scheme allows fine-grained control over the model's sensitivity to recording conditions. Hence, the generated embeddings may vary significantly with changes in recording conditions, meaning that embeddings for audio of the same speaker, but recorded under different circumstances, will be separated in the embedding space.

To assess the similarity of audio snippets, a metric such as cosine similarity/distance between the speech embeddings can be used. The average similarity between audio pairs from the same speaker decreases as the recording conditions are altered in one of the snippets (e.g., by adding noise or modifying the frequency response). As recording conditions diverge, audio from the same speaker becomes increasingly difficult to distinguish (in the embedding space) from audio of other speakers. Therefore, the embeddings are less effective for reliably identifying individuals across a range of recording conditions, reducing their utility as persistent identifiers.

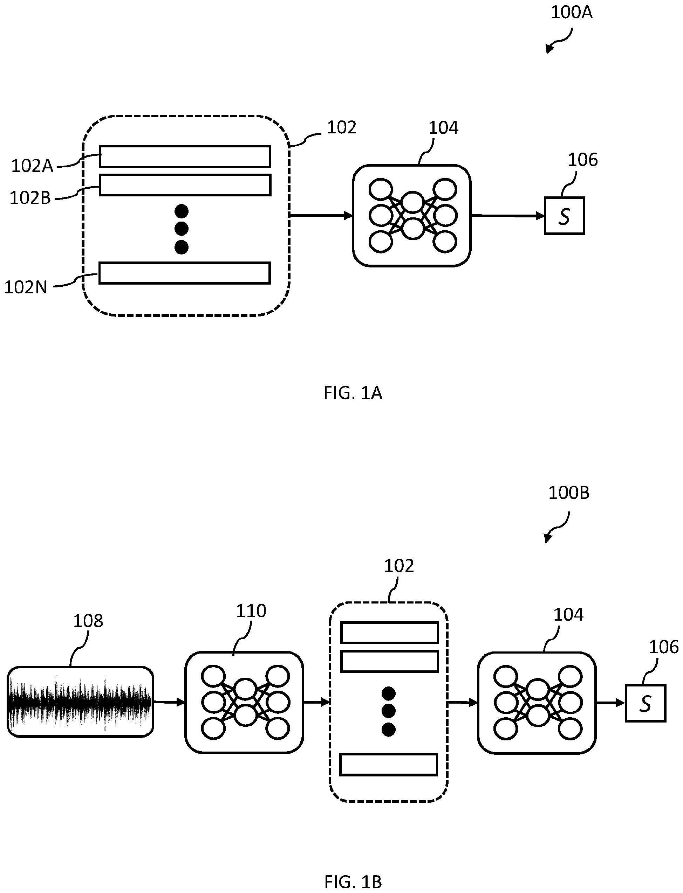

FIG. 1A shows an overview of an example method 100A for generating embeddings of an audio sample. A first encoded representation 102 of an audio snippet is input into an encoder model 104, which processes the first encoded representation 102 to generate a second encoded representation 106 of the audio snippet (also referred to as a "second embedding" of the input audio). The first encoded representation 102 of an audio snippet comprises a plurality of embedding vectors 102A-N (also referred to as a "first embeddings" of the input audio snippet), each of which corresponds to a respective time window of the input audio snippet. The second encoded representation 106 of the audio snippet comprises an embedding vector, S, that encodes properties of the whole input audio snippet, including both vocal properties and recording conditions.

An audio snippet is a short section of audio that comprises the voice of a speaker/singer recorded under a respective set of recording conditions. The audio snippet may, in some examples, have a predefined length, i.e., every audio snippet used by the method has the same fixed duration. The audio snippets may have a fixed length between one and ten seconds long, such as between one and five seconds long, e.g., four second long. In some alternative examples, the length of an audio snippet can be variable, i.e., different audio snippets can in general have a different duration.

The first encoded representation 102 comprises a sequence of embedding vectors 102AN that collectively encode features of an audio snippet. Each embedding vector 102A-N corresponds to a respective different temporal section of the audio snippet. For example, the plurality of embedding vectors 102A-N of the first encoded representation 102 may sample the audio snippet at a predefined frequency, such as between 10Hz and 50Hz, e.g., 25Hz. Consecutive embedding vectors 102A-N in the sequence may correspond to consecutive sections of the audio snippet. In some examples, the first encoded representation 102 is generated using an audio encoding model, as described in relation to FIG. 1B.

The first encoded representation 102 is input into the machine-learning encoder model 104, which processes the first encoded representation 102 to generate further encoded representation 106 of the audio snippet. The machine-learning encoder model 102 is, in some examples, a neural network. The neural network may comprise one or more self-attention layers, e.g., comprise a transformer model. The neural network may alternatively or additionally comprise one or more convolutional layers. The neural network may alternatively or additionally comprise one or more fully connected layers.

The second encoded representation 106, *S*, encodes features of the full audio snippet into a low-dimensional representation in an embedding space. The second encoded representation 106 encodes both the voice in the audio snippet and the recording conditions of the audio snippet. In some examples, the second encoded representation 106 is a *d*-dimensional vector in the embedding space, where *d* is the dimension of the embedding space.

The resulting embedding 106 can be used for one or more downstream tasks. For example, for conditional audio generation tasks, where an audio generation model is conditioned on a conditioning audio snippet, one or more embeddings of the generated audio can be compared to an embedding of the conditioning audio snippet (e.g., using a similarity metric, such as a cosine similarity) to determine whether the generated audio is sufficiently similar to (i.e., within a threshold similarity of) the conditioning audio. In some examples, the embeddings 106 an be used as a conditioning signal. For example, the embeddings can be used as a conditioning signal for text-to-speech generation and/or voice translation/dubbing.

The one or more downstream tasks may utilize measures of voice/speaker similarity that are based on the embeddings 106. Examples of such tasks include: data preparation, e.g., diarizing multi-speaker dialogues to know who is speaking when, or filtering out bad/non-matching training examples; speaker verification, e.g.. embeddings 106 are used to check that a provided recording of a speaker giving consent comes from the same person as an uploaded speaker prompt; and measuring whether generated speech adheres to input conditioning data.

FIG. 1B shows an overview of a further example method 100B for generating embeddings of an audio sample. An audio snippet 108 is input into an initial encoder model 110, which processes the audio snippet to generate a first encoded representation 102 of the audio snippet. The first encoded representation 102 of the audio snippet is input into an encoder model 104, which processes the first encoded representation 102 to generate a second encoded representation 106 of the audio snippet, as described in relation to FIG. 1A.

The initial encoder model 110 is a machine-learning encoder model that maps each of a plurality of sections of the input audio snippet 108 to a respective embedding in the first encoded representation 102 of the audio snippet. For example, the initial encoder model maps the audio waveform of the audio snippet, recorded at a first frequency (e.g., 24kHz) frame-wise into embeddings at a second frequency (e.g., 25Hz).

The initial encoder model 110 may be a neural network model. The neural network model may comprise one or more convolutional layers. The neural network model may comprise one or more downsampling layers. The neural network model may comprise one or more residual blocks. The neural network model may comprise one or more fully connected layers.

An example of such an initial encoder model 110 is the SoundStream encoder described in "SoundStream: An End-to-End Neural Audio Codec" (N. Zeghidour et al., arXiv:2107.03312 (2021), the contents of which are incorporated herein in their entirety).

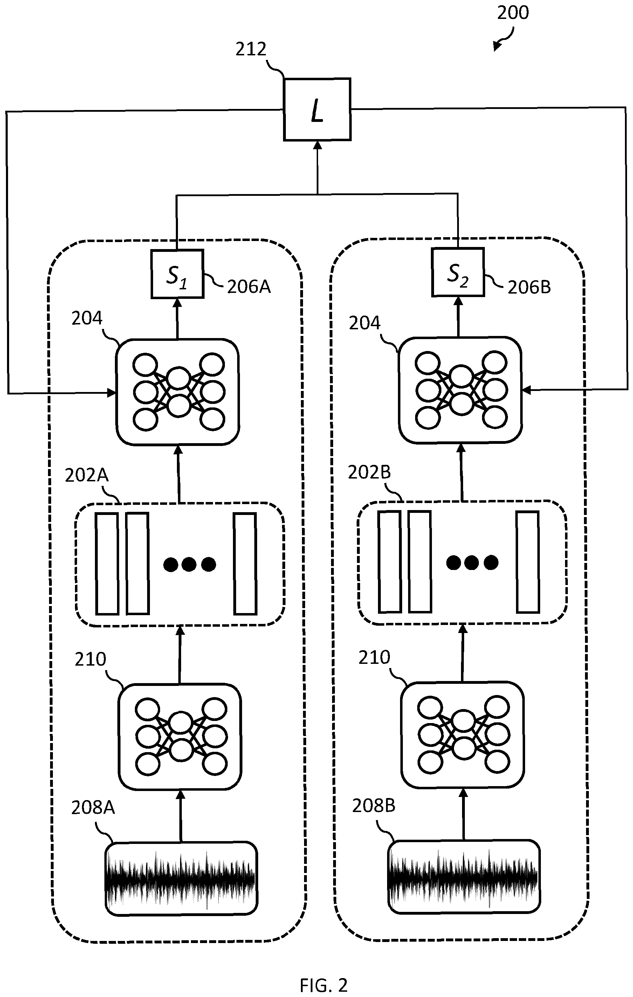

FIG. 2 shows an overview of an example method 200 for training an encoder model. A training pair of audio snippets comprising a first audio snippet 208A and a second audio snippet 208B is obtained from a training dataset comprising a plurality of training pairs. An initial encoder model 210 is applied to each of the audio snippets of the training pair to generate respective initial encoded representation of the audio snippets, i.e., an initial encoded representation 202A of the first audio snippet is generated from the first audio snippet 208A and an initial encoded representation 202B of the second audio snippet is generated from the second audio snippet 208B. The initial encoded representation 202 of each audio snippet comprises a plurality of embedding vectors, each of which corresponds to a respective time window of the input audio snippet, as described in relation to FIGs. 1A and 1B.

Alternatively or additionally, one or more (e.g., a plurality) of the training pairs may comprise pre-generated pairs of initial encoded representations of audio snippets, i.e., a training pair comprises an initial encoded representation 202A of a first audio snippet and an initial encoded representation 202B of a second audio snippet. For such training pairs, the initial encoder model 210 is not used. In some examples, the training dataset includes only pre-generated pairs of initial encoded representations of audio snippets, i.e., no pairs of audio snippets are present in the training dataset. In some examples, the training dataset includes both only pre-generated pairs of initial encoded representations of audio snippets and pairs of audio snippets. In some examples, the training dataset includes only pairs of audio snippets.

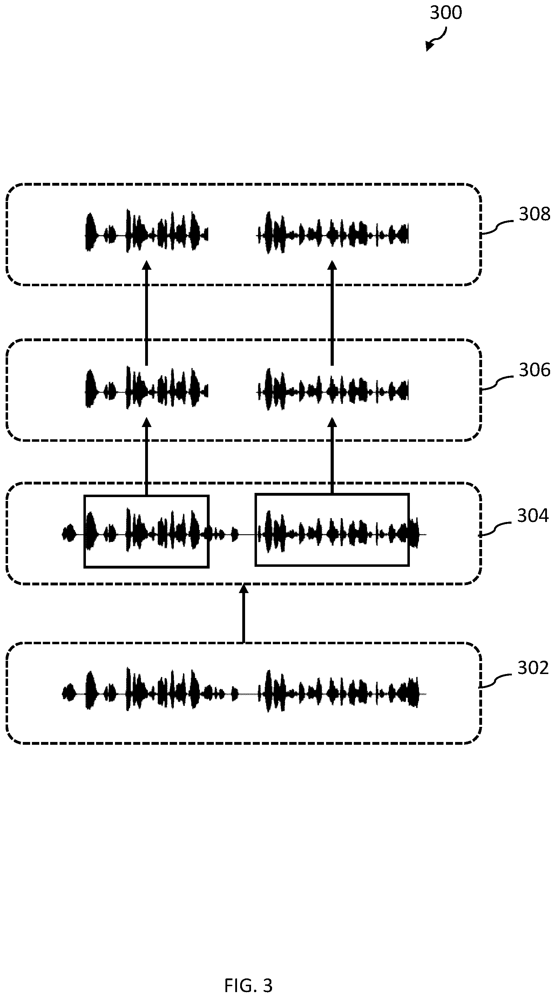

The training dataset may, for example, be generated using any of the methods described in relation to FIG. 3.

Each initial encoded representation 202A, 202B of an audio snippet in the pair is input into a machine-learning encoder model 204, which processes it to generate a respective candidate embedding 206A, 206B for the input encoded representation 202A, 202B, i.e., the machine-learning encoder model 204 processes the encoded representation 202A of the first audio snippet to generate a first candidate embedding 206A, *S₁,* and processes the encoded representation 202B of the second audio snippet to generate a second candidate embedding 206B, *S₂.* The candidate embeddings 206A, 206B may each also be referred to as encoded representation of their respective audio snippet.

The candidate embeddings 206A, 206B are compared using a contrastive loss function *212, L.* A contrastive loss function 212 is based on distances between candidate embeddings in an embedding space, e.g., as measured by a metric, such as a cosine similarity. The contrastive loss function rewards candidate embeddings 206A, 206B from a positive training pair being close in embedding space (and/or penalizes candidate embeddings 206A, 206B from a positive training pair being far apart in embedding space) and penalizes candidate embeddings 206A, 206B from a negative training pair being close in embedding space (and/or rewards candidate embeddings 206A, 206B from a negative training pair being far apart in embedding space).

A positive training pair comprises a pair of audio snippets (or an initial encoded representation of a pair of audio snippets) that have been sampled from the same underlying audio sample with the same set of first augmentations applied (as described in relation to FIG. 3). In general, the audio samples of a positive pair may have had a different second set of augmentations applied (as described in relation to FIG. 3).

A negative training pair comprises a pair of audio snippets (or an initial encoded representation of a pair of audio snippets) that have either been sampled from the same underlying audio sample, but with a different set of first augmentations applied (as described in relation to FIG. 3), or that have been sampled from different underlying audio samples, whether augmented or not. In general, the audio samples of a negative pair may have had a different second set of augmentations applied (as described in relation to FIG. 3).

Updates to the parameters of the encoder model 202 are determined based on the values of the contrastive loss function 212. The updates are, in some examples, determined from values of the contrastive loss function 212 for a batch of training data (i.e., the values of the contrastive loss function 212 from a plurality of training pairs). An optimization routine, such as stochastic gradient descent, can be applied to the loss function to determine the parameter updates for the encoder model 202.

The method 200 is iterated over a plurality of training batches, each comprising one or more (e.g., a plurality) of training pairs until a termination condition is satisfied. The termination condition may, for example, be a threshold number of training epochs/batches/iterations and/or a threshold performance on a test dataset.

The result trained embedding model can be used as an embedding model in the method of FIGs. 1A and 1B.

FIG. 3 shows an overview of an example method 300 for generating a training dataset for training an encoder model. The method 300 follows a two-stage augmentation scheme in which positive training pairs are sampled from the same audio sample (e.g., a speaker recording) after a first set of augmentations have been applied, then a second set of weaker augmentations are applied independently to the extracted snippets of the positive pair. In this manner, by modulating the relative strength of the augmentations in stage 1 and stage 2, the sensitivity of a model trained on the data to variations in the recording conditions can be controlled. This allows a speech embedding model to be trained that is sensitive to noticeable changes in the recording conditions while largely ignoring imperceptible differences, as well as preventing overfitting of the embedding model to irrelevant features of the recoding conditions, such as microphone frequency cutoffs.

The method 300 uses an initial audio sample 302 comprising a vocal sample of a speaker recorded under a respective set of recording conditions. In the first augmentation stage, one or more first augmentations from a first set of augmentations are applied to the initial audio sample 302 to transform it into one or more augmented audio samples 304. The set of first augmentations comprises relatively strong augmentations that can alter the perceptual properties of the recording. Positive pairs of audio snippets 306 are sampled from respective augmented audio samples, i.e., a positive pair of audio snippets has a pair of audio snippets taken from the same augmented audio sample (or both from the un-augmented initial audio sample 302).

In the second augmentation stage, further augmentations from a second set of augmentations 308 are applied independently to one or more (e.g., both) of the audio snippets in a positive pair to generate an augmented pair of audio snippets. In general, one or more different further augmentations can be applied to each audio snippet in a positive pair. The second set of augmentations comprises augmentations that alter audio snippets in manners that are imperceptible to the ear, or at least very hard to detect by the human ear.

The first set of augmentations is stronger than the second set of augmentations. For example, the first set of augmentations contains augmentations that alter perceptual properties of an audio recording (e.g., a sample/snippet) by a noticeable amount to a human, whereas the second set of augmentations contains augmentations that do not alter perceptual properties of an audio recording by a noticeable amount. Altering perceptual properties of an audio recording may comprise modifying the acoustic characteristics of the recording in a way that results in a statistically significant change in one or more psychoacoustic parameters, for example, as measured using established auditory models or signal processing techniques. In some examples, augmentations in the first set of augmentations are above a respective "Just Noticeable Difference" (JND) threshold for one or more perceptual properties/psychoacoustic parameters. In some examples, augmentations in the second set of augmentations are below the respective JND thresholds for the set of perceptual properties/psychoacoustic parameters. A JND represents the smallest change in a stimulus that can be reliably detected by a human observer /listener. Each perceptual property/psychoacoustic parameter may be associated with a respective JND threshold.

The one or more psychoacoustic parameters may, for example, comprise one or more of: a perceived loudness, e.g., as determined using a standardized loudness model such as the Zwicker loudness and/or Moore-Glasberg loudness; a perceived pitch, e.g., as measured using pitch detection algorithms, such as the YIN algorithm or the convolutional representation for pitch estimation (CREPE) method; a perceived timbre, i.e., change in the spectral envelope or temporal envelope of the signal, indicative of a change in the perceived sound quality other than loudness or pitch. This can be quantified using changes in one or more metrics, such as a spectral centroid, a spectral spread, a spectral flux, a set of Mel-frequency cepstral coefficients, a temporal centroid, and/or a zero-crossing rate; a perceived spatial location, for example an interaural time difference (ITD) or interaural level difference (ILD); and/or a perceived reverberation, such as the reverberation time (RT60), the time it takes for the sound to decay by 60 dB after the source stops.

Sampled positive pairs are incorporated into a training dataset of pairs of audio snippets as positive training examples.

The method 300 may further comprise sampling one or more negative pairs from the augmented and/or augmented audio snippets. A negative pair comprises: a pair of audio snippets sampled from different underlying audio samples 302 (whether augmented or not); or a pair of audio snippets sampled from the same underlying audio sample 302, but with different first augmentations applied. The negative pairs are incorporated into the training dataset of pairs of audio snippets as negative training examples.

The first augmentation stage is applied at the audio sample level, i.e., one or more first augmentations are applied to the whole of an audio sample 302 from which a positive pair will be extracted. Hence, both audio snippets in a positive pair will receive the same augmentation in the first stage. The augmentations applied in the first stage are sufficiently strong/noticeable that they may alter the perceived speaker identity. Examples of such first augmentations include one or more of: one or more pitch shifts; significant changes of the volume; significant changes to the frequency response function; adding one or more noticeable reverberations/echoes; adding one or more saturation effects; and applying noise.

An original recording segment (i.e. audio sample 302) can independently receive multiple different first augmentations to generate multiple augmented samples 304, which are treated as separate recordings for the purpose of constructing positive pairs. Hence, a model trained using the generated snippets may see different first augmentations of the same recording as negative pairs during training. This makes the model sensitive to the noticeable differences in the recording such that audios of the same speaker with different recording conditions are mapped further apart from each other in the embedding space than is the case for models that are trained without a first augmentation stage.

The second augmentation are applied at the snippet level, i.e., snippets 306 from the same augmented audio sample 304 have second augmentations applied independently. Hence, the two snippets of a positive pair may in general receive different second augmentations and slightly vary in their recording characteristics. Since the model is trained to map positive pairs as closely to each other in the embedding space, it learns to ignore these differences between the two audio snippets. The second augmentations are weaker than the first augmentations, and are either not noticeable or hardly noticeable to a listener. Examples of such first augmentations include one or more of: one or more small changes in speed; one or more small changes in volume; weakly altering a frequency- and phase response filter; applying a weak bandpass filter; and/or adding weak reverberation, denoising or saturation effects.

The purpose of the second augmentation stage is to make the model insensitive to small variations in the recording conditions. This can prevent the model overfitting to spurious signals such as, e.g., frequency cutoffs and/or other properties of various microphones which are mostly imperceptible to the human ear, but still detectable by a model.

The relative strength of the augmentations in stage 1 and stage 2 can be modulated to control how sensitively a model trained on the resulting training dataset reacts to variations in the recording conditions. This allows a speech embedding model to be trained that is sensitive to noticeable changes in the recording conditions while mostly ignoring imperceptible differences.

The resulting training dataset of positive pairs and negative pairs can be used to train a machine-learning embedding model with a contrastive loss, e.g., as described in relation to FIG. 2.

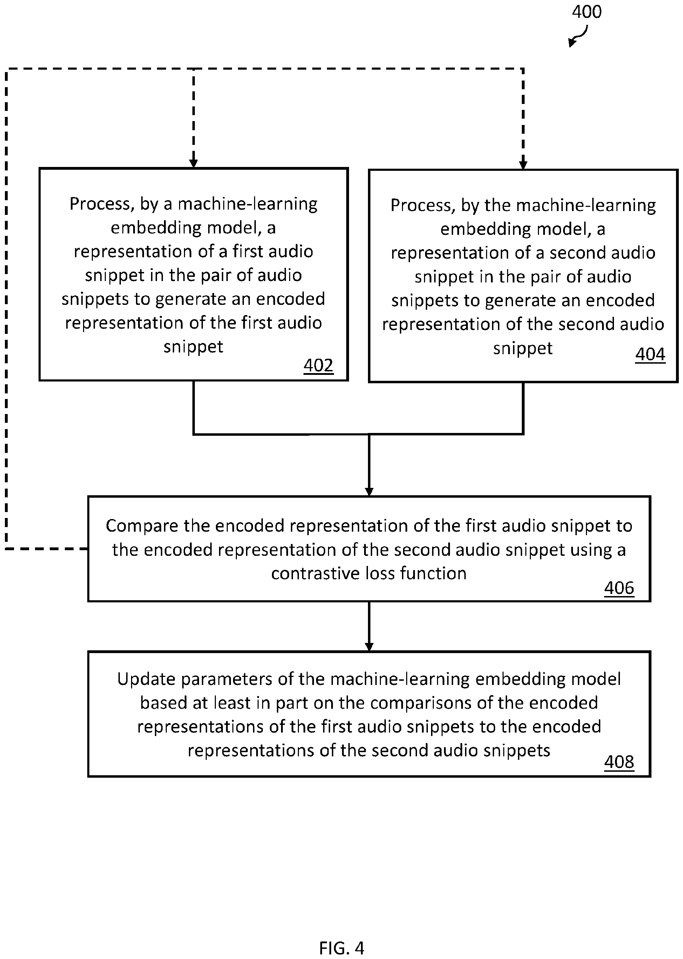

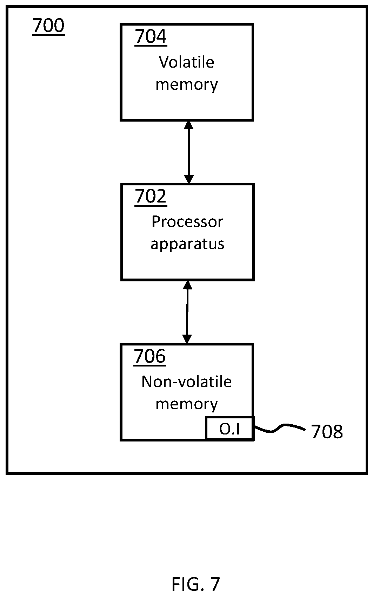

FIG. 4 shows a flow diagram of an example method 400 for training an encoder model. The method 400 may be performed by one or more computing systems/apparatus operating in one or more locations, such as the computing systems/apparatus described in relation to Fig. 7. For convenience, the method 400 is described as being performed by a system. The method 400 may be performed iteratively to train the encoder model.

At operation 402, the system processes, by a machine-learning encoder model, a representation of a first audio snippet in a pair of audio snippets to generate an encoded representation of the first audio snippet.

At operation 404, the system processes, by the machine-learning encoder model, a representation of a second audio snippet in the pair of audio snippets to generate an encoded representation of the second audio snippet.

In some examples, operations 402 and 404 are performed in parallel. In some examples, operations 402 and 404 are performed sequentially.

The representations of the first and second audio snippets may each comprises a respective plurality of first embeddings, with each embedding in the plurality of first embeddings encoding features from a respective a temporal section of the corresponding audio snippet. The system may, in some examples, generate, using a further machine-learning encoder model, the representation of the first/second audio snippet in the pair of audio snippets from the first/second audio snippet in the pair of audio snippets. Alternatively, the representations of the first and second audio snippets may be pre-generated and stored in the training dataset instead of the audio snippets themselves.

The pairs of audio snippets are sampled from an augmented set of audio snippets that has had a two-stage augmentation process applied. The two-stage augmentation process comprises a first set of (string) augmentations and a second set of (weak) augmentations. For some of the iterations of the method, the pair of audio snippets are a positive pair of audio snippets. For some of the iterations of the method, the pair of audio snippets are a negative pair of audio snippets.

A positive pair of audio snippets comprises a first audio snippet and a second audio snippet that are taken from the same underlying audio sample with the same augmentations applied in the first stage of the augmentation process. In general, the first audio snippet and a second audio snippet in a positive pair can have different augmentations applied at the second stage, though some examples may have the augmentations applied at the second stage.

A negative pair of audio snippets comprises a first audio snippet and a second audio snippet that are taken from the different underlying audio samples, whether augmented or not. Alternatively or additionally, a negative pair of audio snippets comprises a first audio snippet and a second audio snippet taken from eth same underlying audio sample, but with different respective augmentations applied at the first augmentation stage to the first audio snippet and the second audio snippet.

At operation 406, the system compares the encoded representation of the first audio snippet to the encoded representation of the second audio snippet using a contrastive loss function. The contrastive loss function is a loss/objective function that rewards embeddings of positive pairs being close in embedding space, as measured by some metric, such as a cosine similarity, and penalizes positive pairs being close in embedding space.

Operations 402-406 can be iterated over a batch/mini-batch of training data before proceeding to operation 408.

At operation 408, the system updates parameters of the machine-learning encoder model based at least in part on the comparisons of the encoded representations of the first audio snippets to the encoded representations of the second audio snippets. The contrastive loss function is a loss function that rewards embeddings from a positive pair being close in eth embedding space and penalizes embeddings from a negative pair being close in the embedding space. The contrastive loss function may be a margin-based contrastive loss function.

The system may apply an optimization routine, such as stochastic gradient descent, to the contrastive loss function to determine the parameter updates. The system may iterate the method 400 until a termination condition is satisfied, e.g., a threshold number of training iterations/epochs being reached and/or a threshold performance on a test dataset of positive and negative training pairs.

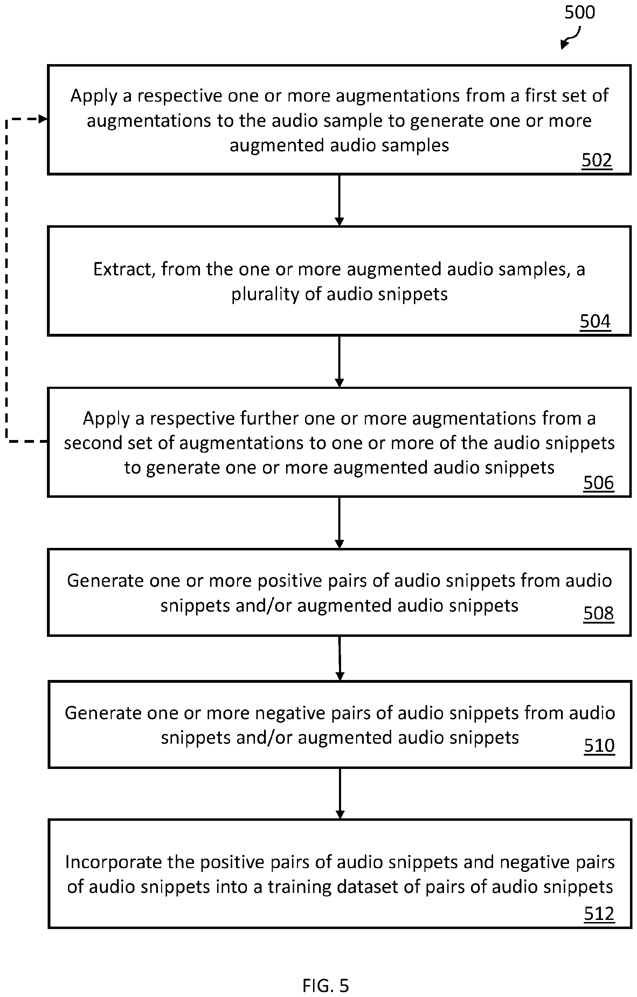

FIG. 5 shows a flow diagram of an example method 500 for generating a training dataset for training an encoder model. The method 500 may be performed by one or more computing systems/apparatus operating in one or more locations, such as the computing systems/apparatus described in relation to Fig. 7. For convenience, the method 500 is described as being performed by a system.

The system performs operations 502 to 506 for each of one or more audio samples to generate a set of augmented audio snippets, form which positive and negative training pairs are sampled in operations 508 and 510.

At operation 502, the system applies one or more sets of first augmentations from a first set of augmentations to an audio sample to generate one or more augmented audio samples. An audio sample may be referred to as an "original audio sample" or an "underlying audio sample".

The first set of augmentations comprises a set of strong modifications that can alter the perceptual properties of an audio sample. For example, the first set of augmentations comprises one or more of: a pitch shift; a change in volume; a change in the frequency response function; addition of reverberations and/or echoes; the addition of saturation effects; and/or the addition of noise.

The first augmentations are, in some examples, selected randomly by the system from the first set of augmentations.

In some examples, a plurality of augmented audio samples are generated from an audio sample by applying a plurality of different sets of first augmentations to the audio sample.

At operation 504, the system extracts, from the one or more augmented audio samples, a plurality of audio snippets. Each audio snippet is a proper subset of the audio samples, i.e. has a duration that is less than the audio sample from which it was sampled. Each audio snippet may have the same predefined duration. The predefined duration may be between 3 and 10 seconds, e.g., 5 seconds.

At operation 506, the system applies a respective further one or more augmentations ("second augmentations") from a second set of augmentations to one or more of the audio snippets to generate a respective one or more augmented audio snippets. The further one or more augmentations are applied at the snippet level, e.g., snippets from the same augmented audio sample can in general have different one or more augmentations applied form the second set of augmentations.

The second set of augmentations comprises a set of weak modifications that do not alter the perceptual properties of an audio snippet, or which barely alter the perceptual properties of the audio snippet. For example, the second set of augmentations may comprise one or more of: a change in speed; a change in volume; a change in the frequency- and/or phase response; applying a weak bandpass filter; adding reverberation; denoising; and/or adding saturation effects. In general, the augmentations in the second set of augmentations are weaker than the augmentations in the first set of augmentations.

The second augmentations are, in some examples, selected randomly by the system from the second set of augmentations.

At operation 508, the system generates one or more positive pairs of audio snippets from audio snippets and/or augmented audio snippets. The positive pairs of audio snippets each comprise a respective first audio snippet and a respective second audio snippet from the same original audio sample that has had the same set of first augmentations applied.

At operation 510, the system generates one or more negative pairs of audio snippets from audio snippets and/or augmented audio snippets. The negative pairs of audio snippets each comprise a respective first audio snippet and a respective second audio snippet that are either taken from different original audio samples, either before or after augmentation, or from the same original audio sample, but with different sets of first augmentations applied.

At operation 512, the system incorporates the positive pairs of audio snippets and negative pairs of audio snippets into a training dataset of pairs of audio snippets. The training dataset can be used in the method of FIGs. 2 and 4 to train an embedding model using a contrastive loss function.

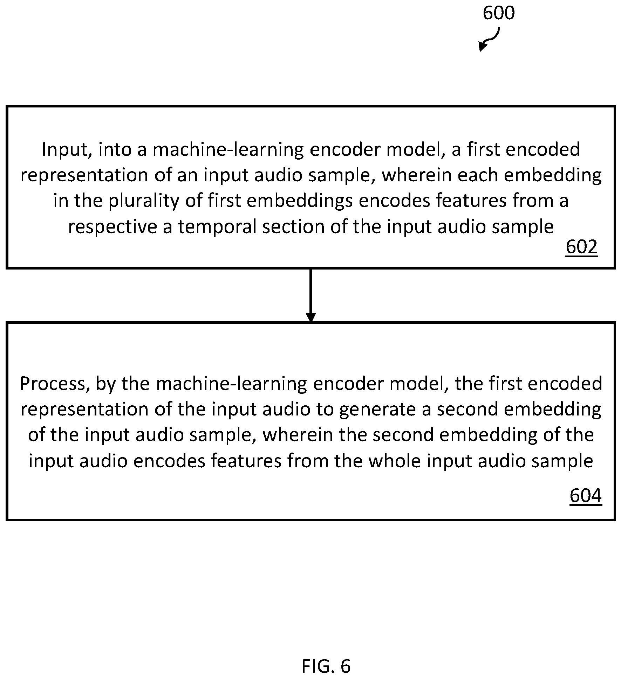

FIG. 6 shows a flow diagram of an example method 600 for generating embeddings of an audio sample. The method 600 may be performed by one or more computing systems/apparatus operating in one or more locations, such as the computing systems/apparatus described in relation to Fig. 7. For convenience, the method 600 is described as being performed by a system.

At operation 602, the system inputs, into a machine-learning encoder model, a first encoded representation of an input audio sample. Each embedding in the plurality of first embedding may encode features from a respective a temporal section of the input audio sample. The input audio may comprise a vocal audio sample from one or more speakers.

The machine-learning encoder model may have been trained using any of the methods described in relation to FIGs. 2 and/or 4.

In some examples, the system generates the first encoded representation of the input audio sample from the input audio sample using an initial/further machine-learning encoder model, for example as described in relation to FIG. 1B.

At operation 604, the system processing, by the machine-learning encoder model, the first encoded representation of the input audio to generate a second embedding of the input audio sample. The second embedding of the input audio encodes features from the whole input audio sample, e.g., encodes both vocal properties and recording conditions of the input audio. The second embedding may be a *d*-dimensional vector in an embedding space.

The second embedding may be used for one or more downstream tasks. For example, a second embedding may be generated from an audio sample that has been generated by a generative model based on a conditioning audio sample. A further second embedding may be generated from the conditioning audio sample. The second embedding and further second embedding may be compares using a metric, e.g., a cosine similarity, to determine whether the generated audio has similar enough vocal properties and effective recoding conditions to the conditioning audio sample. For example, the generated audio sample may be determined to have similar enough properties to the conditioning audio sample when the distance between the second embedding vector and further second embedding vector, as measured by the metric, is below a threshold value.

FIG. 7 shows a schematic example of a system/apparatus 700 for performing any of the methods described herein. The system/apparatus shown is an example of a computing device. It will be appreciated by the skilled person that other types of computing devices/systems may alternatively be used to implement the methods described herein, such as a distributed computing system.

The apparatus (or system) 700 comprises one or more processors 702. The one or more processors control operation of other components of the system/apparatus 700. The one or more processors 702 may, for example, comprise a general-purpose processor. The one or more processors 702 may be a single core device or a multiple core device. The one or more processors 702 may comprise a Central Processing Unit (CPU) or a graphical processing unit (GPU). Alternatively, the one or more processors 702 may comprise specialized processing hardware, for instance a RISC processor or programmable hardware with embedded firmware. Multiple processors may be included.

The system/apparatus comprises a working or volatile memory 704. The one or more processors may access the volatile memory 704 in order to process data and may control the storage of data in memory. The volatile memory 704 may comprise RAM of any type, for example, Static RAM (SRAM), Dynamic RAM (DRAM), or it may comprise Flash memory, such as an SD-Card.

The system/apparatus comprises a non-volatile memory 706. The non-volatile memory 706 stores a set of operation instructions 708 for controlling the operation of the processors 702 in the form of computer readable instructions. The non-volatile memory 706 may be a memory of any kind such as a Read Only Memory (ROM), a Flash memory or a magnetic drive memory.

The one or more processors 702 are configured to execute operating instructions 708 to cause the system/apparatus to perform any of the methods described herein. The operating instructions 708 may comprise code (i.e. drivers) relating to the hardware components of the system/apparatus 700, as well as code relating to the basic operation of the system/apparatus 700. Generally speaking, the one or more processors 702 execute one or more instructions of the operating instructions 708, which are stored permanently or semi-permanently in the non-volatile memory 706, using the volatile memory 704 to store temporarily data generated during execution of said operating instructions 708.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units,, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. These processes and logic flows can be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can utilize any type of central processing unit (CPU) graphics processing units (GPUs), tensor processing units (TPUs), and other machine learning accelerators. GPUs, TPUs, and other machine learning accelerators may be employed to enhance performance, particularly for tasks involving artificial intelligence and machine learning. These accelerators may work in conjunction with CPUs, handling specialized computations while the CPU manages overall system operations and other tasks. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer implemented method comprising:
for a plurality of training examples from a training dataset, each training example comprising a pair of audio snippets:
processing, by a machine-learning embedding model, a representation of a first audio snippet in the pair of audio snippets to generate an encoded representation of the first audio snippet;
processing, by the machine-learning embedding model, a representation of a second audio snippet in the pair of audio snippets to generate an encoded representation of the second audio snippet; and
comparing the encoded representation of the first audio snippet to the encoded representation of the second audio snippet using a contrastive loss function; and
updating parameters of the machine-learning embedding model based at least in part on the comparisons of the encoded representations of the first audio snippets to the encoded representations of the second audio snippets,
wherein the training dataset comprises a plurality training examples sampled from an augmented dataset, the augmented dataset comprising a plurality of augmented audio snippets, wherein an augmented audio snippet is generated by applying one or more augmentations from a second set of augmentations to an audio snippet taken from an underlying audio sample that has had one or more augmentations from a first set of augmentations applied, wherein the first set of augmentations are stronger than the second set of augmentations.

2. The method of claim 1, wherein the training dataset comprises:
a plurality of positive pairs of audio snippets, wherein one or more of the positive pair of audio snippets is sampled from augmented audio snippets of the same underlying audio sample with the same one or more augmentations from the first set of augmentations applied; and
a plurality of negative pairs of audio snippets, wherein one or more of the negative pair of audio snippets comprises a respective first augmented audio snippet sampled from an underlying audio sample with a respective first one or more augmentations from the first set of augmentations applied and a second augmented audio snippet sampled from an underlying audio sample with a second one or more augmentations from the first set of augmentations applied.

3. The method of claim 2, wherein one or more of the negative pair of audio snippets comprises a respective first audio snippet sampled from a first underlying audio sample and a second audio snippet sampled from a second underlying audio sample.

4. The method of any of claims 2 to 3, wherein the contrastive loss function rewards the encoded representation of the first audio snippet and the encoded representation of the second audio snippet of a positive pair being close in embedding space and penalizes the encoded representation of the first audio snippet and the encoded representation of the second audio snippet of a negative pair being close in embedding space.

5. The method of any preceding claim:
wherein the representation of the first audio snippet in the pair of audio snippets and/or the representation of the second audio snippet in the pair of audio snippets comprises a respective plurality of first embeddings; and
wherein each embedding in the plurality of first embeddings encodes features from a respective temporal section of the corresponding audio snippet.

6. The method of claim 5, wherein the method further comprises:
generating, using a further machine-learning embedding model, the representation of the first audio snippet in the pair of audio snippets from the first audio snippet in the pair of audio snippets; and
generating, using the further machine-learning embedding model, the representation of the second audio snippet in the pair of audio snippets from the second audio snippet in the pair of audio snippets.

7. A computer implemented method comprising:
for each of one or more audio samples:
applying a respective one or more augmentations from a first set of augmentations to the audio sample to generate one or more augmented audio samples;
extracting, from the one or more augmented audio samples, a plurality of audio snippets; and
applying a respective further one or more augmentations from a second set of augmentations to one or more of the audio snippets to generate one or more augmented audio snippets,
generating one or more positive pairs of audio snippets from audio snippets and/or augmented audio snippets, wherein the audio snippets in a positive pair are both extracted from the same augmented audio sample, or both extracted from the audio sample;
generating one or more negative pairs of audio snippets from audio snippets and/or augmented audio snippets, wherein the audio snippets in a negative pair are extracted from different augmented audio samples; and
incorporating the positive pairs of audio snippets and negative pairs of audio snippets into a training dataset of pairs of audio snippets,
wherein the first set of augmentations are stronger than the second set of augmentations.

8. The method of claim 7, wherein the method further comprises:
training a machine-learning embedding model on the training dataset using a contrastive loss function.

9. The method of any of claims 7 or 8, wherein the first set of augmentations comprises one or more of: a pitch shift; a change in volume; a change in the frequency response function; addition of reverberations and/or echoes; the addition of saturation effects; and/or the addition of noise.

10. The method of any preceding claim, wherein the second set of augmentations comprises one or more of: a change in speed; a change in volume; a change in the frequency- and/or phase response; applying a weak bandpass filter; adding reverberation; denoising; and/or adding saturation effects.

11. The method of any preceding claim, wherein:
the respective one or more augmentations from the first set of augmentations are selected randomly from the first set of augmentations; and/or
the respective one or more further augmentations from the second set of augmentations are selected randomly from the second set of augmentations.

12. A computer implemented method comprising:
inputting, into a machine-learning embedding model, a first encoded representation of an input audio sample, the first encoded representation comprising a plurality of first embeddings, wherein each embedding in the plurality of first embeddings encodes features from a respective a temporal section of the input audio sample; and
processing, by the machine-learning embedding model, the first encoded representation of the input audio to generate a second embedding of the input audio sample, wherein the second embedding of the input audio encodes features from the whole input audio sample.

13. The method of claim 12, wherein the machine-learning embedding model has been trained using the method of any of claims 1-6.

14. A system comprising one or more processors and a memory, the memory storing computer readable instructions that, when executed by the one or more processors, causes the system to perform a method according to any preceding claim.

15. A computer program product comprising computer readable instructions that, when executed by a computer, cause the computer to perform a method according to any of claims 1 to 13.
